# EUROPÄISCHE PATENTANMELDUNG

(11) **EP 4 596 871 A1**
(43) Veröffentlichungstag der Anmeldung: **06.08.2025**
(21) Anmeldenummer: 24215729.5
(22) Anmeldetag: 27.11.2024
(51) Int. Cl.: F03D 7/04, F03D 17/00, F03D 80/50

(54) **VERFAHREN UND VORRICHTUNG ZUM ÜBERWACHEN EINER UMGEBUNG VON WINDERENERGIEANLAGEN**

(30) Priorität: 02.02.2024 DE 102024200976
(71) Anmelder: Rössler, Jochen, 91583 Schillingsfürst (DE)
(72) Erfinder: Rössler, Jochen, 91583 Schillingsfürst (DE)
(74) Vertreter: Prüfer & Partner mbB Patentanwälte · Rechtsanwälte

(57) **Zusammenfassung**

1. Ein Verfahren zum Überwachen einer Umgebung (7) einer Windenergieanlage (2) umfasst das Empfangen (100) von Bildern und/oder Videosequenzen von einer Kamera (6), das Durchführen einer computerbasierten Objekterkennung (101) zum Identifizieren eines zur Bewirtschaftung der Umgebung (7) dienenden Objekts (8) in den von der Kamera (6) empfangenen Bildern und/oder Videosequenzen und das Ausgeben (104) einer Meldung (8), ob die Windenergieanlage (2) betrieben werden darf, ob die Windenergieanlage (2) nicht betrieben werden darf oder ob eine externe Überprüfung erforderlich ist, in Abhängigkeit von dem identifizierten Objekt.

## Beschreibung

Die vorliegende Erfindung bezieht sich auf ein Verfahren und eine Vorrichtung zum Überwachen einer Umgebung einer Windenergieanlage sowie auf ein Verfahren und eine Vorrichtung zum Steuern der Windenergieanlage.

Für den Betrieb von Windenergieanlagen gibt es gesetzliche Vorgaben, die dem Artenschutz gefährdeter Tierarten dienen, beispielsweise von Fledermäusen oder Greifvögeln wie dem Rotmilan. Durch technische Maßnahmen muss sichergestellt werden, dass pro Windenergieanlage nicht mehr als eine bestimmte Anzahl dieser Tiere pro Jahr getötet werden.

Dazu müssen in den Windparks Abschaltalgorithmen umgesetzt werden, die die Windenergieanlagen zu Zeiten, in denen mit einer erhöhten Gefährdung dieser Tiere zu rechnen ist, abschalten. Das Abschalten der Windenergieanlagen führt andererseits zu einer Verringerung der erzeugten Energiemenge und somit zu Einnahmeeinbußen für den Betreiber.

Um einen angemessenen Ausgleich zwischen dem Tierschutz und der Rentabilität von Windenergieanlagen zu erzielen, müssen die Abschaltalgorithmen so optimiert werden, dass sie einerseits bei einer realen Gefährdungslage die Windenergieanlagen zuverlässig abschalten, dass sie andererseits aber nicht unnötig abschalten, wenn eigentlich keine Gefährdung der Tiere gegeben ist.

So beschreibt DE 10 2014 226 979 A1 beispielsweise ein Verfahren und eine Vorrichtung zum Steuern des Betriebs von Windenergieanlagen, bei dem durch Klassifizierung von Witterungsbedingungen wie Niederschlagsmenge, Umgebungstemperatur, Windgeschwindigkeit abhängig von der aktuellen Tageszeit ein Signal erzeugt wird, das angibt, ob die Windenergieanlagen abgeschaltet werden oder bleiben müssen oder ob sie eingeschaltet werden oder bleiben können.

Außer Witterungsbedingungen können aber auch andere Änderungen der Umgebung einer Windenergieanlage das Maß der Gefährdung von Tieren beeinflussen. So können beispielsweise durch Bewirtschaftung eines Feldes Beutetiere aufgeschreckt werden, die Greifvögel anziehen. Bislang musste ein Windparkbetreiber von dem Landwirt über die Bewirtschaftung informiert werden, um gegebenenfalls die Windenergieanlagen abschalten zu können.

DE 10 2019 200 391 B1 beschreibt ein Steuerungs- und Überwachungssystem für eine Windenergieanlage, das eine sensorischen Überwachungseinrichtung und eine Auswerte-/Signaleinrichtung enthält und durch Vergleich der von der Überwachungseinrichtung gelieferten Daten mit einem Ursprungsdatensatz eine Maßnahme wie Bodenbearbeitung, Mahd, Ernte oder Ausbringen von Festmist erkennt und abhängig davon eine kategorisierte Meldung erzeugt, ob ein Abschalten der Windenergieanlage erforderlich ist, ob eine Überprüfung durch eine externe Überwachungsstelle erforderlich ist oder ob der Anlagenbetrieb fortgeführt oder wieder aufgenommen werden darf.

Die Aufgabe der vorliegenden Erfindung besteht darin, ein verbessertes Verfahren und eine verbesserte Vorrichtung zum Überwachen einer Umgebung einer Windenergieanlage sowie zum Steuern der Windenergieanlage zur Verfügung zu stellen. Diese sollen auch einfach und flexibel anpassbar sein, um auf sich ändernde Vorgaben durch Gutachter oder Behörden schnell reagieren zu können.

Die Aufgabe wird gelöst durch die Gegenstände der unabhängigen Ansprüche. Weiterbildungen der Erfindung sind jeweils in den Unteransprüchen angegeben. Dabei können die Gegenstände eines unabhängigen Anspruchs auch durch Merkmale der Unteransprüche eines anderen unabhängigen Anspruchs weitergebildet sein.

Das erfindungsgemäße Verfahren dient zum Überwachen einer Umgebung einer Windenergieanlage und umfasst die Schritte:
- Empfangen von Bildern und/oder Videosequenzen von einer Kamera,
- Durchführen einer computerbasierten Objekterkennung zum Identifizieren eines zur Bewirtschaftung der Umgebung dienenden Objekts in den von der Kamera empfangenen Bildern und/oder Videosequenzen und
- Ausgeben einer Meldung in Abhängigkeit von dem identifizierten Objekt, ob die Windenergieanlage betrieben werden darf, ob die Windenergieanlage nicht betrieben werden darf oder ob eine externe Überprüfung erforderlich ist.

Durch dieses Verfahren kann beispielsweise bestimmt werden, ob ein zur Bewirtschaftung dienendes Objekts in der Umgebung einer Windenergieanlage vorhanden ist und dadurch die Gefährdungslage für gefährdete Tiere erhöht ist, so dass die Windenergieanlage abgeschaltet werden muss, oder ob das nicht der Fall ist. Dadurch können einerseits gefährdete Tiere wirkungsvoll geschützt werden, andererseits können unnötige Stillstandszeiten und somit Betriebseinbußen vermieden werden.

Weitere Merkmale und Zweckmäßigkeiten der Erfindung ergeben sich aus der Beschreibung von nicht einschränkenden Ausführungsbeispielen anhand der beigefügten Figuren.
- Fig. 1: zeigt eine schematische Darstellung eines Überwachungssystems gemäß der vorliegenden Erfindung.
- Fig. 2: zeigt ein Flussdiagramm, das den Betrieb einer in Fig. 1 gezeigten Auswerteeinrichtung veranschaulicht.
- Fig. 3: zeigt eine schematische Darstellung eines Überwachungssystems gemäß der vorliegenden Erfindung, bei der ein System mit künstlicher Intelligenz lokal im Windpark untergebracht ist.
- Fig. 4: zeigt eine schematische Darstellung eines Überwachungssystems gemäß der vorliegenden Erfindung, bei der ein System mit künstlicher Intelligenz zentral in einem Rechenzentrum untergebracht ist.

Im Folgenden werden mit Bezug auf die beigefügten Figuren konkrete, nicht einschränkende Ausführungsbeispiele der vorliegenden Erfindung beschrieben.

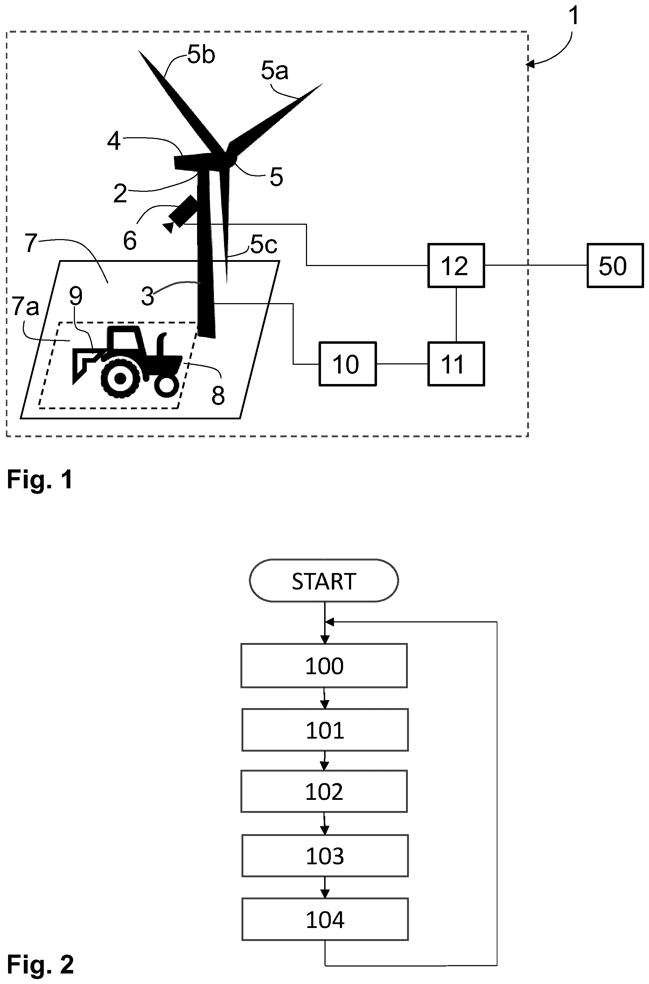

Fig. 1 zeigt eine schematische Darstellung eines Überwachungssystems gemäß der vorliegenden Erfindung.

Ein Windpark 1 umfasst eine Windenergieanlage (Windrad) 2 . Die Windenergieanlage 2 enthält einen Turm 3, eine Maschinengondel 4 und einen Rotor 5 mit Rotorblättern 5a, 5b, 5c. Anstelle der in der Figur gezeigten drei Rotorblätter 5a, 5b, 5c. kann die Windenergieanlage 2 auch weniger oder mehr Rotorblätter aufweisen. In der Figur ist eine einzelne Windenergieanlage 2 dargestellt. Zur Vereinfachung wird im Folgenden ebenfalls ein Fall beschrieben, in dem der Windpark 1 nur eine einzelnen Windenergieanlage 2 umfasst. Das Ausgeführte gilt jedoch entsprechend, wenn ein Windpark eine Mehrzahl von Windenergieanlagen umfasst.

Der Windpark 1 enthält ferner eine oder mehrere Kamera(s) 6 zum Überwachen einer Umgebung 7 der Windenergieanlage 2. In der Figur ist eine Kamera 6 gezeigt, die an dem Turm 3 der Windenergieanlage 2 angebracht ist. Die Kamera(s) kann oder können statt an dem Turm 3 der Windenergieanlage 2 auch an einer anderen Stelle des Windparks 1 so angebracht sein, dass sie eine Umgebung 7 der Windenergieanlage 2 überwachen kann oder können. In der Praxis werden ein oder mehrere Kamerasysteme an dem Turm 3 der Windenergieanlage 2 montiert, die wiederum ein oder mehrere Kamera(s) 6 enthalten, um möglichst die zu überwachende Fläche oder 360° um die Windenergieanlage 2 herum überwachen können.

Als Kamera kann beispielsweise eine Einzelbildkamera verwendet werden, die in nacheinander einzelne Bilder aufnimmt und ausgibt, oder eine Videokamera, die Videosequenzen aufnimmt und ausgibt. Die Kamera nimmt vorzugsweise Bilder im Wellenlängenbereich sichtbaren Lichts auf. Es können aber auch Infrarot Kameras oder eine Kombination daraus verwendet werden.

Der Windpark 1 enthält ferner einen Windparkserver 10, der den Betrieb der Windenergieanlage 2 steuert und Daten von ihr empfängt, sowie eine Steuereinheit 11 zum Umsetzen von Abschaltalgorithmen, beispielsweise zum Zweck des Tierschutzes. Die Steuereinheit 11 kann auch in dem Windparkserver 10 integriert sein.

Schließlich enthält der Windpark eine Auswerteeinrichtung 12, die zum Auswerten der von der Kamera 6 gelieferten Signale ausgebildet ist. Die Auswerteeinrichtung 12 ist mit einer externen Meldestelle 50 verbunden. Die Meldestelle ist beispielsweise ein Kontrollzentrum eines Windparkbetreibers, der einen oder mehrere Windparks betreibt und von dem Kontrollzentrum aus überwacht und steuert, oder das Servicezentrum des Dienstleisters für den Artenschutz in Windparks. Es kann in einem Windpark oder entfernt von allen betriebenen Windparks angeordnet sein.

Eine Bewirtschaftung eines Flurstücks 7a in der Umgebung 7 der Windenergieanlage 2 erfolgt beispielsweise durch einen Traktor 8, der mit einer Zusatzvorrichtung 9 ausgestattet ist.

Im Betrieb gibt die Kamera 6 Bilder oder Videosequenzen an die Auswerteeinrichtung 12 aus. Die Auswerteeinrichtung 12 ist dazu ausgebildet, aus diesen Bildern oder Videosequenzen zu erkennen, ob eine Bewirtschaftung der Umgebung 7 der Windenergieanlage 2 durchgeführt wird, zu beurteilen, ob durch die Bewirtschaftung eine Aufenthaltswahrscheinlichkeit von Tieren, beispielsweise von Greifvögeln, im Bereich der Windenergieanlage und demzufolge eine Gefährdung der Tiere durch die rotierenden Rotorblätter 5a, 5b, 5c erhöht wird, und eine dementsprechende Meldung abzugeben. Dazu ist in ihr beispielsweise eine Software installiert, die bei ihrer Ausführung die Auswerteeinrichtung 12 dazu veranlasst, ein Verfahren durchzuführen, wie es im Folgenden beschrieben wird.

Fig. 2 zeigt ein Flussdiagramm des von der Auswerteeinrichtung 12 im Betrieb durchgeführten Verfahrens.

Im Schritt 100 empfängt die Auswerteeinrichtung 12 Bilder oder Videosequenzen von der Kamera 6.

Im Schritt 101 wird eine computerbasierte Objekterkennung durchgeführt, bei in den von der Kamera 6 empfangenen Bildern oder Videosequenzen einzelne Objekte identifiziert werden. Von besonderer Bedeutung ist dabei das Identifizieren von zur Bewirtschaftung dienenden Objekten, beispielsweise eines in der Umgebung 7 der Windenergieanlage 2 fahrenden Traktors 8 oder anderer Erntemaschinen, und eventueller an dem Objekt angebrachter Zusatzeinrichtungen 9, beispielsweise einer an den Traktor angehängten Egge.

In Schritt 102 wird unter Zuziehung weitere Merkmale die Art der durch das identifizierte Objekt 8 durchgeführten Bewirtschaftung bestimmt. Das kann beispielsweise anhand der Art des identifizierten Objekts 8 und der daran angebrachten Zusatzeinrichtungen 9 und/oder durch eine Veränderung der Umgebung bei einer Bewegung des Objekts 8 durch die Umgebung erfolgen, zum Beispiel durch die Veränderung der Farbe eines Felds nach dem Eggen oder Mähen.

Zur Objekterkennung und zum Bestimmen der Bewirtschaftungsart wird ein auf ein System mit künstlicher Intelligenz (im Folgenden kurz KI-System genannt) eingesetzt. Das KI-System kann durch eine auf einem ohnehin vorhandenen Rechner laufende Software realisiert sein oder durch einen eigenständigen Rechner, auf dem die entsprechende Software installiert ist und ausgeführt wird.

Als KI-System kommt ein System maschinellen Lernens zur Anwendung, also ein künstliches System, das aus Trainingsdaten lernt (trainiert wird) und diese nach Beendigung der Lernphase verallgemeinern kann. Dieses System kann beispielsweise ein Deep-Learning-System sein, bei dem das maschinelle Lernen mittels künstlicher neuronaler Netze erfolgt.

In einem konkreten Ausführungsbeispiel wurde eine auf einer ankerfreien YOLO-V8-Architektur basierendes KI-System verwendet. YOLO (You Only Look Once) ist ein Deep-Learning-Algorithmus mit einer einstufigen Detektionsstrategie, der für die Klassifizierung und Erkennung von Objekten in Bildern optimiert ist.

Das KI-System wird im Voraus zum Identifizieren von Objekten und zur Erkennung von Bewirtschaftungsarten trainiert. Dazu werde ihm einerseits Bilder und/oder Videosequenzen von Kameras zugeführt, die zum Beobachten einer Umgebung einer Windenergieanlage in einem Windpark angebracht sind. Andererseits werden ihm Informationen zugeführt, auf welchem Bild oder welcher Videosequenz welches Objekt zu erkennen ist, mit welcher Zusatzeinrichtung das Objekt eventuell versehen ist und welcher Bewirtschaftungsart das Objekt mit seiner eventuellen Zusatzeinrichtung zugeordnet ist oder welche Bewirtschaftungsart aus einer Veränderung der Umgebung zu erkennen ist.

Zu den trainierten Objekten zählen beispielsweise Traktoren, Mähdrescher, Maishäcksler, Mähaufbereiter, Feldhäcksler, Zugmaschinen, Selbstfahrende Maschinen wie Kartoffelroder, Rüben-Vollernter oder Ladewagen, Raupen usw. Bei der Gemüseernte oder der Spargelernte können auch Erntehelfer in Rotten trainiert werden, je nachdem, was die zuständige Behörde als anziehend für die Vögel deklariert. Zu den trainierten Zusatzeinrichtungen zählen beispielsweise Egge, Pflug, Fräse, Sämaschine, Walze, Scheibenegge, Grubber, Saatbettkombination, Güllefass, Kunstdüngerstreuer, Miststreuer, Pflanzenschutzspritze, Anhänger, Ballenpresse, Schwader usw. Zu den trainierten Bewirtschaftungsarten zählen beispielsweise Pflügen, Säen, Mähen, Dreschen, Grubbern, Eggen, Walzen, Ernte allgemein (Gras, Getreide, Stroh, Raps, Mais, Kartoffeln, Gemüse, Obst uvm.), Wenden von Gras oder Stroh oder Heu, Streuen von Kunstdünger, Streuen von Festmist, Ausbringen von Gülle, Lagern und Aufsammeln von Erntegut, Aufsammeln von Steinen, Beobachtungsfahrt usw.

Das Trainieren des KI-Systems kann auch im laufenden Betrieb weiter fortgeführt werden, um die Zuverlässigkeit und Erkennungsgenauigkeit weiter zu verbessern.

Nach der Objekterkennung und dem Bestimmen der Bewirtschaftungsart wird in Schritt 103 eine Bestimmung durchgeführt, wie sehr durch die Bewirtschaftung die Gefährdungslage für Tiere verändert wird, beispielsweise durch Aufscheuchen von Beutetieren die Gefährdungslage für Greifvögel.

Die Gefährdungslage bzw. die Änderung dieser durch verschiedene Ereignisse kann windparkspezifisch definiert werden und wird meist von Behörden bzw. dem Betreiber des Windparks vorgegeben. Das bedeutet unter anderem, dass nicht immer die gleichen Bewirtschaftungen für eine Abschaltung relevant sind.

Wenn die Gefährdungslage durch die Bewirtschaftungsart nicht oder nur geringfügig erhöht wird und einen vorbestimmten ersten Schwellenwert S1 nicht überschreitet, darf die Windenergieanlage betrieben werden. Wenn die Gefährdungslage beträchtlich erhöht wird und einen zweiten Schwellenwert S2 überschreitet, der größer gleich dem ersten Schwellenwert ist, darf die Windenergieanlage nicht betrieben werden. In einem Übergangsbereich zwischen den beiden Schwellenwerten S1, S2 oder falls die Bewirtschaftungsart nicht eindeutig erkannt wird, ist für die Entscheidung, ob die Windenergieanlage betrieben werden darf oder nicht, eine externe Überprüfung erforderlich.

In Schritt 104 gibt die Auswerteeinrichtung entsprechend der in Schritt 104 getroffenen Bestimmung eine Meldung aus, in der unterschieden wird, ob die Windenergieanlage 2 betrieben werden darf, ob die Windenergieanlage 2 nicht betrieben werden darf oder ob eine externe Überprüfung erforderlich ist.

Diese Meldung wird beispielsweise an die externe Meldestelle 50 ausgegeben, wo dann die erforderlichen Maßnahmen eingeleitet werden können. Für den Fall, dass keine externe Überprüfung erforderlich ist, kann die Meldung aber auch direkt an die Steuereinheit 11 des Windparks ausgegeben werden, die dann selbsttätig den Windparkserver 10 anweist, ein eventuell erforderliches Einschalten oder Ausschalten der Windenergieanlage 2 durchzuführen. In der Steuereinheit sind dann die jeweiligen Zeiten, wie lange der Windpark oder das Windrad oder mehrere Windräder stehen bleiben muss/müssen enthalten.

Die Bestimmung, ob die Windenergieanlage 2 betrieben werden darf oder nicht oder ob eine externe Überprüfung erforderlich ist, sowie das Ausgeben der entsprechenden Meldung können allein aufgrund der in Schritt 101 durchgeführten Objekterkennung erfolgen. Durch Berücksichtigen der in Schritt 102 bestimmten Bewirtschaftungsart kann aber zwischen abschaltungsrelevanten Bewirtschaftungsarten und nicht abschaltungsrelevanten Bewirtschaftungsarten unterschieden werden. Letztere können dann ignoriert oder lediglich zur Nachvollziehbarkeit protokolliert werden. Dadurch werden unnötige Abschaltzeiten und damit Energieeinbußen der Windenergieanlage weiter reduziert. Je nach Bewirtschaftungsart kann auch die Zeitdauer angepasst werden, für die die Windenergieanlage nach Erkennen der Bewirtschaftung ausgeschaltet bleiben muss.

Mit dem oben beschriebenen Verfahren ist es möglich, flexibel auf eine Bewirtschaftung der Umgebung der Windenergieanlage zu reagieren, ohne im Voraus über eine geplante Bewirtschaftung informiert werden zu müssen.

Durch die Objekterkennung eines zur Bewirtschaftung dienenden Objekts ist es möglich, schon zu Beginn der Bewirtschaftung zu reagieren und nicht erst, nachdem die Bewirtschaftung durch eine Änderung der Umgebung sichtbar wird. Anders als bei einem reinen Bildvergleich der aktuell von der Kamera gelieferten Bilder und/oder Videosequenzen mit Vergleichsbildern und/oder Videosequenzen können dadurch auch Bewirtschaftungsarten erkannt werden, die sich nicht aus einer Änderung der Umgebung ableiten lassen. Die Erkennung der Bewirtschaftungsart ermöglicht es, einen angemessenen Ausgleich zwischen dem Tierschutz und der Rentabilität der Windenergieanlage zu erzielen, weil die Windenergieanlage nur bei einer tatsächlichen Erhöhung der Gefährdungslage abgeschaltet wird und nicht bei nicht abschaltungsrelevanten Bewirtschaftungsarten.

So wird einerseits sichergestellt, dass die gesetzlichen Vorgaben zum Tierschutz zuverlässig eingehalten werden. Andererseits wird eine unerwünschte Verringerung der Energieerzeugung vermieden, die durch übervorsichtiges, zu häufiges Abschalten der Windenergieanlage auftreten würde.

Das oben beschriebene Verfahren kann vielfach abgewandelt und ergänzt werden.

So kann die Objekterkennung beispielsweise dazu ausgebildet sein, nicht nur zur Bewirtschaftung dienende Objekte wie Traktoren erkennen, sondern auch andere Fahrzeuge wie Autos, Motorräder oder Fahrräder, Nebel, Reflexion, Personen, Tiere usw. Dadurch können beispielsweise Traktoren zuverlässiger von anderen Objekten unterschiede werden, wodurch Falschmeldungen reduziert werden können. Fahrzeuge von Wartungsfirmen auf den Flächen direkt an der Windenergieanlage können ebenfalls erkannt werden, um gegebenenfalls Erkenntnisse über den Zutritt zu Anlagen sicherzustellen, falls an einer WEA ein Türalarm ausgelöst wurde und sich kein Monteur bei der Betriebsführung gemeldet hat. Dies dient der allgemeinen Versorgungssicherheit, weil unerlaubtes Betreten der Anlagen frühzeitig erkannt werden kann und Schäden an der Infrastruktur vermieden werden können.

In den von der Kamera gelieferten Bildern oder Videosequenzen können Bildabschnitte ausgeblendet oder geschwärzt werden, die für den Tierschutz nicht relevanten Flächen entsprechen, beispielsweise nicht bewirtschaftete Flächen wie Straßen, Wegen oder Parkplätze. Solche Flächen können gemäß der jeweiligen Genehmigungsauflagen des Windparks von der zuständigen Behörde festgelegt werden. Durch das Ausblenden oder Schwärzen solcher Flächen bleiben diese bei der Objekterkennung und/oder dem Bestimmen der Bewirtschaftungsart unberücksichtigt. Dadurch können einerseits Falschmeldungen verringert werden, die beispielsweise durch auf Straßen oder Wegen fahrende Traktoren ausgelöst werden. Andererseits dient diese Maßnahme auch dem Datenschutz, weil auf gespeicherten Bildern beispielsweise keine auf öffentlichen Flächen befindlichen Personen und keine Autokennzeichen von fahrenden oder geparkten Autos zu erkennen sind. Ferner kann der überwachte Umgebungsbereich mittels dieser Vorgehensweise eingeschränkt werden, beispielsweise auf ein Umfeld von bis 100 oder bis 250 oder bis 500 Metern um die Windenergieanlage oder auf spezielle ausgewählte Flurstücke.

Durch Hinterlegen von pixelgenauen Masken, in denen die bewirtschafteten Flurstücke einzeln gekennzeichnet sind, kann erkannt werden, auf welchem Flurstück die Bewirtschaftung stattfindet. Das erlaubt eine gezielte Benachrichtigung und eine unterschiedliche Bewertung der Relevanz der Bewirtschaftung je nach Entfernung des Flurstücks von der Windenergieanlage.

Durch Speichern, Zuordnen und Auswerten von vergangenen Erkennungen kann bei einer Mehrfacherkennung einer Bewirtschaftung durch mehrere Kameras oder mehrfach in Folge verhindert werden, dass Mehrfachmeldungen ausgegeben werden. Eine Meldung wird nur dann ausgegeben, wenn mittels eines definierten Regelwerks bezüglich Ort, Zeit und Kameras festgestellt wird, dass die Bewirtschaftung nicht deckungsgleich mit einer bereits gemeldeten Bewirtschaftung ist.

Das Erkennen einer Bewirtschaftung bei Dunkelheit, beispielsweise einer Maisernte bei Nacht, kann beispielsweise durch Auswerten von Lichtmustern erfolgen, die beispielsweise von zwei nebeneinander fahrenden Traktoren oder selbstfahrenden Maschinen mit jeweils mehreren ungefähr parallel gerichteten Lichtern erzeugt werden, oder durch Auswertern von Infrarotstrahlungsmustern.

Eine andere Möglichkeit, eine Bewirtschaftung bei Dunkelheit zu erkennen, bietet das Erkennen von Veränderungen an Flurstücken am nächsten Tag. Das ist zwar langsamer als die Auswertung von Lichtmustern, kann aber auch Bewirtschaftungen erkennen, die ansonsten unerkannt bleiben würden. Weil die Lichtverhältnisse von Tag zu Tag stark schwanken können, wird vorzugsweise ein Vergleich von künstlich berechneten, normierten Langzeit-Durchschnittsaufnahmen von zwei oder mehr aufeinander folgenden Tagen durchgeführt. Durch eine Mittelwertbildung über lange Zeiträume und Normierung anhand mehrerer Referenzpunkte lässt sich eine Veränderung des Aussehens einzelner Flurstücke robust feststellen. Weicht ein solches neues Bild stark von den vorherigen ab, so muss es seit der Aufnahme vom Tag vorher eine starke Veränderung gegeben haben. Wenn in diesem Zeitraum bereits eine Bewirtschaftung erkannt wurde, kann das ignoriert werden. Ansonsten kann eine nachträgliche Meldung erfolgen. Die eigentliche Erkennung kann anhand der Farbzusammensetzung, Texturbeschaffenheit, anderen angepassten Eigenschaftsberechnungen erfolgen oder durch das KI-System.

Das Erkennen der oben genannten zusätzlichen Merkmale kann dem KI-System ebenso antrainiert werden wie das Erkennen zur Bewirtschaftung dienender Objekte. Dazu werden ihm wiederum einerseits Bilder und/oder Videosequenzen von Kameras zum Beobachten der Umgebung der Windenergieanlage zugeführt und andererseits Informationen, welches dieser Merkmale darauf zu erkennen ist.

Das KI-System kann auch durch Trainieren mit normalen Bildern und verschiedenen Sichtbehinderungen und Artefakten ferner dazu ausgebildet sein, eigenständig Störungen zu erkennen, beispielsweise Sichtbehinderung durch Nebel, Regen, Schnee und dergleichen, gebrochenes Glas, verschmutze Linsen, fest stehende Rotorblätter (bei Wartung), Vogelflug oder Vogelkot, Insektenansammlungen. So kann das System automatisch darauf hinweisen, dass die Erkennung nicht zuverlässig funktioniert und es daher zeitweise nicht in der Lage zu einer automatischen Abschaltung oder einer korrekten Meldung ist.

Der in Fig. 1 gezeigte prinzipielle Aufbau kann in verschiedener Art und Weise umgesetzt werden. So kann beispielsweise das zum Auswerten der Bilder oder Videosequenzen der Kamera dienende KI-System lokal im Windpark oder zentral in einem Rechenzentrum untergebracht sein.

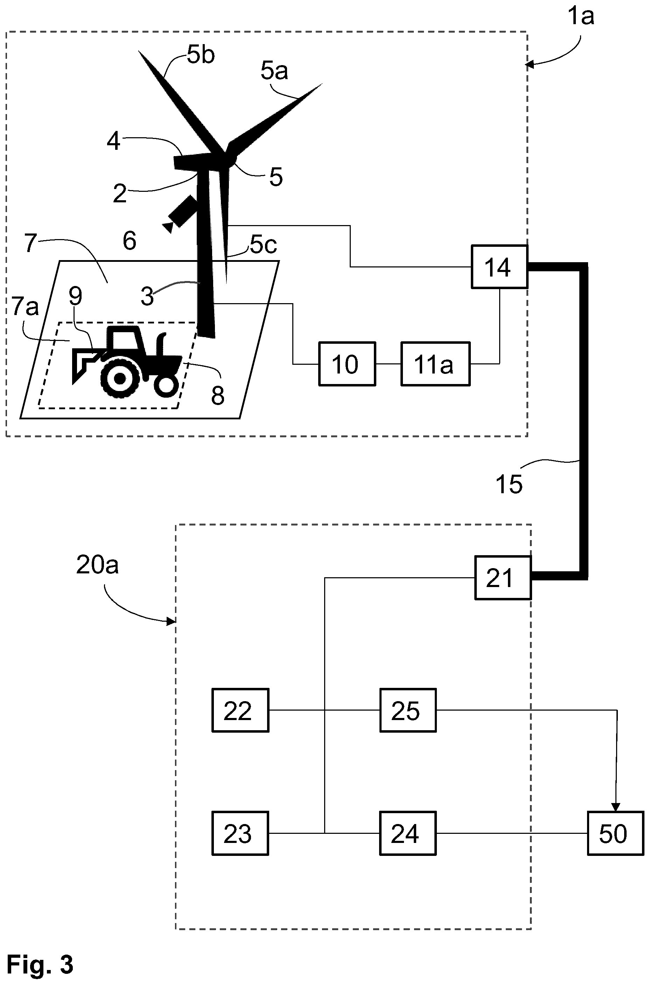

Fig. 3 zeigt eine schematisches Blockschaltbild eines Überwachungssystems, bei dem das KI-System lokal im Windpark untergebracht ist.

Wie der in Fig. 1 gezeigte Windpark 1 enthält der in Fig. 3 gezeigte Windpark 1a die Windenergieanlage 2, die Kamera 6 und den Windparkserver 10. Anstelle der Steuereinheit 11 enthält er eine Steuereinheit 11a, in der die Funktionen der Auswerteeinrichtung 12 integriert sind. Die Kamera 6 und die Steuereinheit 11a sind mit einer Netzwerkschnittstelle 14 verbunden.

Die Steuereinheit 11a empfängt die von der Kamera gelieferten Bilder oder Videosequenzen über die Netzwerkschnittstelle 14, wertet sie wie oben beschrieben aus und erzeugt die Meldung, ob die Windenergieanlage 2 betrieben werden darf, ob die Windenergieanlage 2 nicht betrieben werden darf oder ob eine externe Überprüfung erforderlich ist. Die Meldung wird über die Netzwerkschnittstelle 14 nach außen ausgegeben.

Für den Fall, dass keine externe Überprüfung erforderlich ist, kann die Steuereinheit 11a den Windparkserver 10 direkt anweisen, ein eventuell erforderliches Einschalten oder Ausschalten der Windenergieanlage 2 durchzuführen.

Die Steuereinheit kann auch Ereignisdaten des Windparks 1a, beispielsweise Ein- und Ausschaltzeitpunkte der Windenergieanlage, Betriebsdaten der Windenergieanlage, Fehlermeldungen, Dokumentationsdaten uvm., über die Netzwerkschnittstelle 14 nach außen ausgeben.

Die Netzwerkschnittstelle 14 des Windparks 1a ist über eine Netzwerkverbindung 15 mit einer Netzwerkschnittstelle 21 eines Rechenzentrums 20a verbunden. Die Netzwerkverbindung 15 kann beispielsweise als VPN-Tunnel über das Internet ausgebildet sein. Der dafür erforderliche VPN-Server ist in der Netzwerkschnittstelle 21 integriert und sitzt im Rechenzentrum 20a.

Das Rechenzentrum 20a enthält einen FTP-Server 22, einen Datenserver 23, einen Webserver 24 und einen Mailserver 25.

Der FTP-Server 22 empfängt und speichert Bilder oder Videosequenzen, die über die Netzwerkverbindung 15 von dem Windpark 1a geliefert werden. Der Datenserver 23 speichert das Meldesignal und die Ereignisdaten, die über die Netzwerkverbindung 15 von dem Windpark 1a geliefert werden. Der Webserver 24 ermöglicht eine Zugriff von außen auf die in dem FTP-Server 22 gespeicherten Bilder oder Videosequenzen und auf die in dem Datenserver 23 gespeicherten Daten, beispielsweise von der externen Meldestelle 50 aus. Der Mailserver 25 ermöglicht eine Benachrichtigung der externen Meldestelle 50 auch dann, wenn sie gerade nicht mit dem Webserver 24 verbunden ist.

Wenn das von dem Windpark 1a gelieferte Meldesignal anzeigt, dass eine externe Überprüfung erforderlich ist, überprüft ein Bediener der externen Meldestelle 50 die Bilder oder Videosequenzen und die Ereignisdaten und fällt eine Entscheidung, ob die Windenergieanlage 2 betrieben werden darf oder nicht. Falls die Steuereinheit 11a den Windparkserver 10 nicht direkt anweist, die Windenergieanlage 2 ein- oder auszuschalten, bestätigt oder widerruft er auch die von der Steuereinheit 11a gemeldete Einschätzung, ob die Windenergieanlage 2 betrieben werden darf oder nicht.

Diese Entscheidung oder Bestätigung wird über den Webserver 24 und die Netzwerkverbindung 15 an den Windpark 1a übertragen und dort von der Steuereinheit 11a verarbeitet. Entsprechend der Entscheidung oder Bestätigung weist die Steuereinheit 11a den Windparkserver 10 an, ein eventuell erforderliches Einschalten oder Ausschalten der Windenergieanlage 2 durchzuführen.

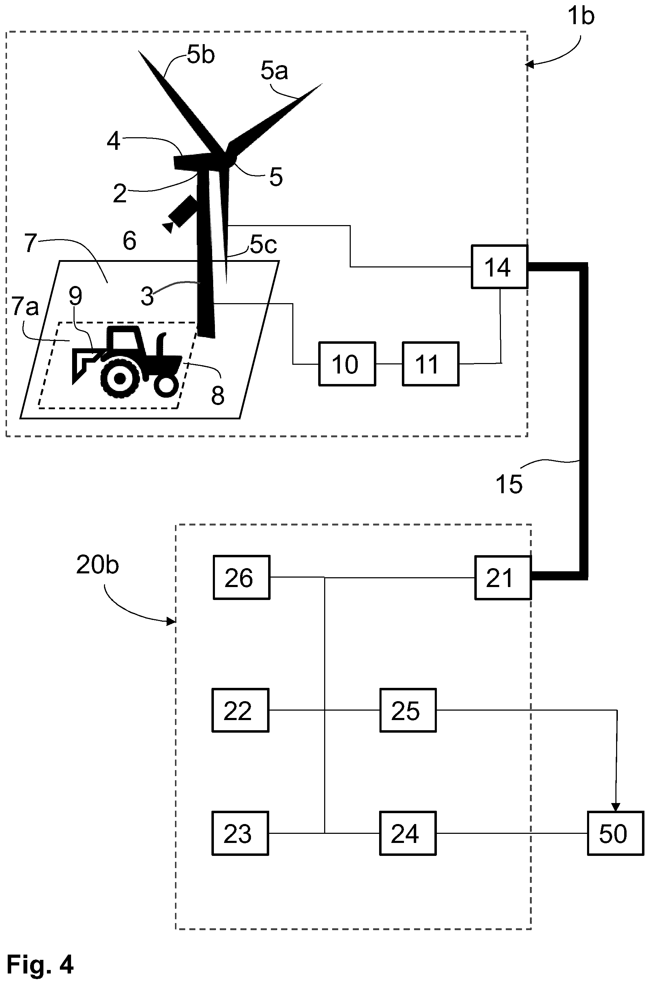

Fig. 4 zeigt eine schematisches Blockschaltbild eines Überwachungssystems, bei dem das KI-System zentral in einem Rechenzentrum untergebracht ist.

Wie der in Fig. 1 gezeigte Windpark 1 enthält der in Fig. 4 gezeigte Windpark 1b die Windenergieanlage 2, die Kamera 6, den Windparkserver 10 und die Steuereinheit 11. Ferner enthält er die in Fig. 3 gezeigte Netzwerkschnittstelle 14, mit der die Kamera 6 und die Steuereinheit 11 verbunden sind.

Die Netzwerkschnittstelle 14 des Windparks 1b ist über die Netzwerkverbindung 15 mit der Netzwerkschnittstelle 21 eines Rechenzentrums 20b verbunden. Das in Fig. 4 gezeigte Rechenzentrums 20b unterscheidet sich von dem in Fig. 3 gezeigten Rechenzentrum 20a lediglich darin, dass es zusätzlich einen KI-Server 26 enthält. Ansonsten sind Aufbau und Funktionsweise des Rechenzentrums 20b gleich denen des Rechenzentrums 20a.

In diesem Ausführungsbeispiel übernimmt der KI-Server 26 die Funktionen der Auswerteeinrichtung 12. Er wertet die auf den FTP-Server hochgeladenen Bilder oder Videosequenzen wie oben beschrieben aus und erzeugt die Meldung, ob die Windenergieanlage 2 betrieben werden darf, ob die Windenergieanlage 2 nicht betrieben werden darf oder ob eine externe Überprüfung erforderlich ist.

Für den Fall, dass keine externe Überprüfung erforderlich ist, kann der KI-Server 26 direkt eine entsprechende Anweisung über die Netzwerkverbindung zu der Steuereinheit 11 übertragen, die dementsprechend den Windparkserver 10 anweist, ein eventuell erforderliches Einschalten oder Ausschalten der Windenergieanlage 2 durchzuführen.

Ansonsten erfolgt die Überprüfung der Bilder oder Videosequenzen und der Ereignisdaten durch den Bediener der externen Meldestelle 50 und das Übertragen der Entscheidung oder Bestätigung an den Windpark 1a wie oben in Verbindung mit Fig. 3 beschrieben.

Auch mit den in Fig. 3 und 4 gezeigten Überwachungssystemen lassen sich die Wirkungen erzielen, die bei der Beschreibung des in Fig. 1 gezeigten Überwachungssystems angegeben sind.

Die obigen Ausführungsbeispiele beschreiben einen Windpark mit einer Windenergieanlage und einer Kamera. Der Windpark kann aber auch mehr als eine Windenergieanlage und/oder mehr als eine Kamera aufweisen.

So können beispielsweise bei einem Windpark mit einer einzelnen Windenergieanlage mehrere Kameras in der Umgebung verteilt angeordnet sein. Dadurch können beispielsweise von entfernter liegenden Bereichen besser aufgelöste Bilder aufgenommen werden. Die oben beschriebene Objekterkennung und Bestimmung der Bewirtschaftungsart erfolgen dann für jede der Kameras getrennt. Zur Bestimmung der Gefährdungslage und zum Ausgeben der Meldung werden die Ergebnisse aller Kameras berücksichtigt.

Bei einem Windpark mit zwei oder mehr Windenergieanlagen kann bestimmt werden, welche Windenergieanlagen abzuschalten sind, wenn eine Bewirtschaftung erfolgt. Dazu können für verschiedene Windenergieanlagen verschiedene Meldungen ausgegeben werden. Manchmal ist nur eine Windenergieanlage von der Bewirtschaftung betroffen, manchmal sind es mehrere Windenergieanlagen.

Die Festlegung der zu beobachtenden Flächen je Windenergieanlage ist in einem Training der Auswerteeinheit zu programmieren. Dabei ist darauf zu achten, dass bei der Erkennung von Ereignissen keine Mehrfacherkennung erfolgt und keine Windenergieanlage unnötig lange angehalten wird.

Kann die gesamte Umgebung eines Windparks mit mehreren Windenergieanlagen von einer Kamera beobachtet werden, kann beispielsweise bei einer Identifizierung des bewirtschafteten Flurstücks je nach Lage dieses Flurstücks relativ zu den einzelnen Windenergieanlagen für einige Windenergieanlagen die Meldung ausgegeben werden, dass sie betrieben werden dürfen und für andere, dass sie nicht betrieben werden dürfen.

Bei der Verwendung mehrerer Kameras in einem Windpark mit mehreren Windenergieanlagen kann für jede Windenergieanlage ein Zuordnung erfolgen, welche Kameras zu Erzeugung der Meldung für diese Windenergieanlage ausgewertet werden sollen und welche nicht.

## Patentansprüche

1. Ein Verfahren zum Überwachen einer Umgebung (7) einer Windenergieanlage (2), umfassend die Schritte:
Empfangen (100) von Bildern und/oder Videosequenzen von einer Kamera (6),
Durchführen einer computerbasierten Objekterkennung (101) zum Identifizieren eines zur Bewirtschaftung der Umgebung (7) dienenden Objekts (8) in den von der Kamera (6) empfangenen Bildern und/oder Videosequenzen,
Ausgeben (104) einer Meldung (8), ob die Windenergieanlage (2) betrieben werden darf, ob die Windenergieanlage (2) nicht betrieben werden darf oder ob eine externe Überprüfung erforderlich ist, in Abhängigkeit von dem identifizierten Objekt.

2. Das Verfahren gemäß Anspruch 1, wobei
die Objekterkennung (101) weiter dazu ausgebildet ist, eine an dem identifizierten Objekt (8) angebrachte Zusatzeinrichtung (9) zu erkennen, und
das Ausgeben (104) der Meldung in Abhängigkeit von dem identifizierten Objekt (8) und/oder der identifizierten Zusatzeinrichtung (9) erfolgt.

3. Das Verfahren gemäß Anspruch 1 oder 2, weiter umfassend:
Bestimmen (102) einer Bewirtschaftungsart aus den von der Kamera (6) empfangenen Bildern und/oder Videosequenzen und/oder dem identifizierten Objekt (8) und/oder der identifizierten Zusatzeinrichtung (9),
wobei das Ausgeben (104) der Meldung in Abhängigkeit von dem identifizierten Objekt (8) und/oder der identifizierten Zusatzeinrichtung (9) und/oder der bestimmten Bewirtschaftungsart erfolgt.

4. Das Verfahren gemäß einem der Ansprüche 1 oder 2, wobei
die Objekterkennung (101) und/oder das Bestimmen (102) der Bewirtschaftungsart mittels eines KI-Systems (11a, 12, 26) durchgeführt werden, vorzugsweise mittels eines Systems maschinellen Lernens, in weiter bevorzugter Weise mittels eines Deep-Learning-Systems, in noch weiter bevorzugter Weise mittels eines auf der YOLO-V8-Architektur basierenden KI-Systems.

5. Das Verfahren gemäß Anspruch 4, wobei das KI-System (11a, 12, 26) im Voraus trainiert wurde mit Bildern und/oder Videosequenzen von Kameras und mit deren Zuordnung zu bestimmten zur Bewirtschaftung dienenden Objekten und/oder zu bestimmten Zusatzeinrichtungen und/oder zu bestimmten Bewirtschaftungsarten.

6. Das Verfahren gemäß einem der Ansprüche 1 bis 5, wobei die Objekterkennung (101) ferner dazu ausgebildet ist, außer der Identifizierung eines zur Bewirtschaftung dienenden Objekts (8) weitere in der Umgebung befindliche und/oder sich bewegende Objekte zu erkennen, vorzugsweise Autos, Nebel, Reflexion, Personen, Tiere und/oder Fahrzeuge von Wartungsfirmen.

7. Das Verfahren gemäß einem der Ansprüche 1 bis 6, ferner umfassend das Ausblenden oder Schwärzen von Bildbereichen in den von der Kamera (6) gelieferten Bildern oder Videosequenzen, die für den Tierschutz nicht relevanten Flächen entsprechen,
wobei die ausgeblendeten oder geschwärzten Bildbereiche bei der Objekterkennung (101) und/oder dem Bestimmen (102) der Bewirtschaftungsart nicht berücksichtigt werden.

8. Das Verfahren gemäß einem der Ansprüche 1 bis 7, ferner umfassend das Zuordnen verschiedener Bildbereiche in den von der Kamera (6) gelieferten Bildern oder Videosequenzen zu verschiedenen Flurstücken (7a),
wobei das Ausgeben (104) der Meldung in Abhängigkeit einer Lage des Flurstücks (7a), in dem das Objekt (8) und/oder die Zusatzeinrichtung (9) identifiziert und/oder die Bewirtschaftungsart bestimmt wurde, relativ zu der Windenergieanlage (2) erfolgt.

9. Das Verfahren gemäß einem der Ansprüche 1 bis 8, wobei die Objekterkennung (101) ferner dazu ausgebildet ist, Objekte (8) bei Dunkelheit anhand von Lichtmustern und/oder Infrarotstrahlungsmustern zu erkennen.

10. Das Verfahren gemäß einem der Ansprüche 1 bis 9, wobei
zwei oder mehr Windenergieanlagen (2) überwacht werden und
für zumindest zwei verschiedene Windenergieanlagen (2) verschiedene Meldungen ausgegeben werden,
wobei vorzugsweise die Meldungen für jede der zwei verschiedenen Windenergieanlagen (2) in Abhängigkeit davon ausgegeben wird, welche Lage ein bewirtschaftetes Flurstück (7a) relativ zu der jeweiligen Windenergieanlage (2) hat, und/oder
wobei vorzugsweise Bilder und/oder Videosequenzen von mehr als einer Kamera (6) ausgewertet werden und die Meldungen für jede der zwei verschiedenen Windenergieanlagen (2) in Abhängigkeit davon ausgegeben wird, welche Kamera die Bilder und/oder Videosequenzen geliefert hat, in denen das zur Bewirtschaftung dienende Objekt (8) und/oder die Zusatzeinrichtung (9) identifiziert und/oder die Bewirtschaftungsart bestimmt wurde.

11. Das Verfahren gemäß einem der Ansprüche 1 bis 10, wobei die Objekterkennung (101) ferner dazu ausgebildet ist, Störungen zu erkennen, vorzugsweise Sichtbehinderung durch Nebel, Regen und Schnee, gebrochenes Glas und verschmutze Linsen, feststehende Rotorblätter, Vögel und/oder Insekten, und
bei einer erkannten Störung kein Ausgeben (104) der Meldung erfolgt, sondern stattdessen eine Warnung ausgegeben wird, dass die Objekterkennung (101) und/oder das Bestimmen (102) der Bewirtschaftungsart nicht zuverlässig funktioniert.

12. Ein Verfahren zum Steuern einer Windenergieanlage (2), umfassend das Verfahren zum Überwachen der Umgebung (7) der Windenergieanlage (2) gemäß einem der Ansprüche 1 bis 11 sowie
das Einschalten oder Eingeschaltetlassen der Windenergieanlage (2), wenn die ausgegebene Meldung anzeigt, dass die Windenergieanlage (2) betrieben werden darf, und/oder
das Ausschalten oder Ausgeschaltetlassen der Windenergieanlage, wenn die ausgegebene Meldung anzeigt, dass die Windenergieanlage (2) nicht betrieben werden darf.

13. Eine Vorrichtung zum Überwachen einer Umgebung (7) einer Windenergieanlage (2), umfassend
eine Kamera (6) und
eine Auswerteeinrichtung (11a, 12, 25) zum Auswerten der von der Kamera (6) gelieferten Bilder und/oder Videosequenzen,
wobei die Auswerteeinrichtung (11a, 12, 25) dazu ausgebildet ist ein Verfahren gemäß einem der Ansprüche 1 bis 11 durchzuführen.

14. Die Vorrichtung zum Überwachen einer Umgebung (7) einer Windenergieanlage (2) gemäß Anspruch 13,
wobei die Auswerteeinrichtung (11a) lokal in dem die Windenergieanlage (2) aufweisenden Windpark (1a) angeordnet ist, oder
wobei die Auswerteeinrichtung (25) in einem entfernt von dem die Windenergieanlage (2) aufweisenden Windpark (1b) gelegenen Rechenzentrum (20b) angeordnet ist und der Windpark (1b) und das Rechenzentrum (20b) über eine Netzwerkverbindung (15) miteinander verbunden sind.

15. Eine Vorrichtung zum Steuern einer Windenergieanlage (2), umfassend
die Vorrichtung zum Überwachen einer Umgebung (7) einer Windenergieanlage (2) gemäß einem der Ansprüche 13 bis 14 und
eine Steuereinheit (11, 11a),
wobei die Steuereinheit dazu ausgebildet ist,
die Windenergieanlage (2) einzuschalten oder eingeschaltet zu lassen, wenn die von der Auswerteeinrichtung (11a, 12, 25) ausgegebene Meldung anzeigt, dass die Windenergieanlage (2) betrieben werden darf, und/oder
die Windenergieanlage (2) auszuschalten oder ausgeschaltet zu lassen, wenn die von der Auswerteeinrichtung (11a, 12, 25) ausgegebene Meldung anzeigt, dass die Windenergieanlage (2) nicht betrieben werden darf.
